# EUROPÄISCHE PATENTANMELDUNG

(11) **EP 2 578 469 A2**
(43) Veröffentlichungstag der Anmeldung: **10.04.2013**
(21) Anmeldenummer: 12187196.6
(22) Anmeldetag: 04.10.2012
(51) Int. Cl.: B62B 3/06

(54) **Palettenhub- und Transportvorrichtung**

(30) Priorität: 06.10.2011 DE 102011114948; 18.10.2011 DE 102011116318
(71) Anmelder: Huber, Albert, 73463 Westhausen (DE)
(72) Erfinder: Huber, Albert, 73463 Westhausen (DE); Ruppel, Andreas, 89257 Illertissen (DE); Huber, Paul, 89155 Donaurieden (DE)
(74) Vertreter: Graf Glück Kritzenberger

(57) **Zusammenfassung**

Palettenhub- und Transportvorrichtung mit einem anhebbaren und absenkbaren Trag- und Hubrahmen (9) sowie mit wenigstens zwei voneinander beabstandeten und vom Trag- und Hubrahmen wegstehenden Gabelarmen (10), die jeweils mit einer Gabelarmoberseite (10.1) eine Palettenauflage bilden, wobei an wenigstens einem Gabelarm (10) zwischen einem freien Ende des Gabelarms und dem Trag- und Hubrahmen (9) eine Markierung (13, 13a, 13b, 32) vorgesehen ist.

## Beschreibung

Die Erfindung bezieht sich auf eine Palettenhub- und Transportvorrichtung gemäß Oberbegriff Patentanspruch 1 sowie auf einen Anschlag oder eine Anschlagvorrichtung gemäß Oberbegriff Patentanspruch 9.

Palettenhub- und Transportvorrichtungen zum Aufnehmen, Anheben, Transportieren und Wiederabstellung von beladenen und daher in der Regel auch ein hohes Gewicht aufweisenden Paletten, insbesondere von Holzpaletten sind in verschiedenen Ausführungen bekannt, speziell auch als Hubwagen. Derartige Palettenhub- und Transportvorrichtung bestehen u.a. aus einem Trag- und Hubrahmen mit wenigstens zwei von diesem Rahmen sich wegerstreckenden parallelen und von einander beabstandeten Gabelarmen, die dann im Verwendungsfall zum Aufnehmen und Anheben einer abgestellten Palette unter diese so eingeführt oder eingefahren werden, dass die Gabelarme mit ihren Oberseiten bzw. mit der von diesen Oberseiten gebildeten Palettenauflage je nach Zugänglichkeit der Palette z.B. gegen die Deckbretter oder die Querbretter einer Holzpalette anliegen.

Da beladene Paletten vielfach zur Reduzierung des Lagerraumes einander dicht benachbart abgestellt sind, muss bei der Aufnahme und dem Anheben einer Palette auch darauf geachtet werden, dass mit den Gabelarmen der verwendeten Palettenhub- und Transportvorrichtung lediglich die gewünschte Palette angehoben wird, dennoch diese Palette vollständig auf den Gabelarmen aufliegt, mit den Gabelarmen nicht zugleich auch eine benachbarte Palette teilweise erfasst und beim Anheben der Gabelarme möglicherweise beschädigt wird. Speziell bei Arbeiten unter Zeitdruck ist bisher nicht auszuschließen, dass eine mit der Palettenhub- und Transportvorrichtung aufzunehmende Palette auf dem Gabelarm dieser Vorrichtung unvollständig aufliegt und/oder eine der aufzunehmenden und zu transportierenden Palette benachbarte Palette mit den Gabelarmen der Palettenhub- und Transportvorrichtung teilweise erfasst wird, wobei es in beiden Fällen zu Beschädigungen an den Paletten kommen kann.

Aufgabe der Erfindung ist es, eine Palettenhub- und Transportvorrichtung aufzuzeigen, die die vorgenannten Nachteile vermeidet und eine zuverlässige vollständige Aufnahme der Paletten mit den Gabelarmen ermöglicht. Zur Lösung dieser Aufgabe ist eine Palettenhub- und Transportvorrichtung entsprechend dem Patentanspruch 1 ausgebildet. Ein Anschlag oder eine Anschlagvorrichtung zur Verwendung bei einer Palettenhub- und Transportvorrichtung ist Gegenstand des Patentanspruchs 9.

Bei der Erfindung ist an wenigstens einem der Gabelarme bzw. an der Oberseite wenigstens eines Gabelarmes eine Markierung vorgesehen, mit der der Bedienungsperson angezeigt wird, ob die Gabelarme unter die jeweils anzuhebende Palette ausreichend eingeführt sind, und zwar soweit, dass die Palette vollständig auf den Gabelarmen aufgenommen ist, insbesondere auch ohne dass eine eventuell benachbarte Palette mit erfasst wird. Die Markierung ist im einfachsten Fall eine optisch wahrnehmbare Markierung z.B. in Form eines Strichs oder eines Punktes. Bei einer bevorzugten Ausführungsform der Erfindung ist die Markierung von einem Anschlag gebildet, der zwischen einem wirksamen und einem nicht wirksamen Zustand bewegbar ist und im wirksamen Zustand nicht nur der Bedienungsposition anzeigt, dass die Gabelarme unter die jeweils anzuhebende Palette ordnungsgemäß eingefügt sind, sondern bei ordnungsgemäß unter die anzuhebende Palette eingeführten Gabelarmen auch gegen eine Längsseite der Palette anliegt.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert, bei denen die Markierung von jeweils wenigstens einem Anschlag gebildet ist. Es zeigen:
- Fig. 1: und 2 in vereinfachter Darstellung und in Seitenansicht sowie in Draufsicht eine als Hubwagen ausgebildete Palettenhub- und Transportvorrichtung gemäß der Erfindung;
- Fig. 3: und 4 jeweils in schematischer Darstellung und in Seitenansicht einen anhebbaren und absenkbaren Anschlag der Palettenhub- und Transportvorrichtung;

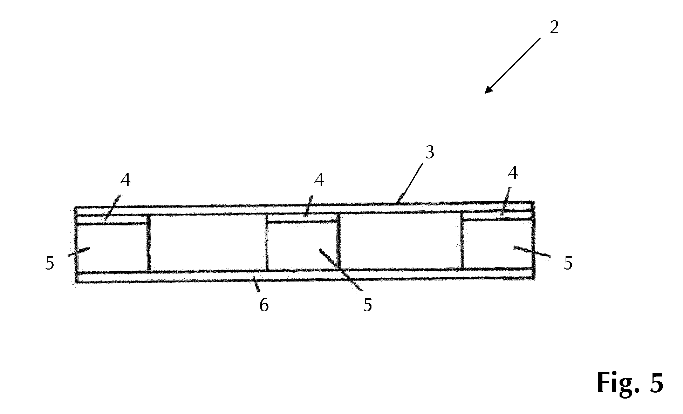

- Fig. 5: eine Palette in Seitenansicht.

In den Figuren ist 1 eine Palettenhub- und Transportvorrichtung in Form eines Hubwagens, der zum Aufnehmen, Anheben, Transportieren oder Bewegen und Abstellen von Paletten 2 dient.

Diese sind beispielsweise aus Holz gefertigte Paletten 2 (Holzpaletten) und umfassen in bekannter Weise u.a. obere Deckbretter 3, die die Oberseite der Palette 2 bilden, seitliche und mittlere Querbretter 4, auf denen die Deckbretter 3 befestigt sind und die sich ihrerseits über Klötze 5 auf unteren Bodenbretter 6 abstützen, die die Unterseite der Palette 2 bilden. Die Palette 2 ist beispielsweise in Draufsicht rechteckförmig ausgeführt, wobei die beiden kürzeren Umfangsseiten parallel zu den Querbrettern 4 orientiert sind.

Der Hubwagen 1 besitzt in bekannter Weise eine lenkbare Achse 7 mit wenigstens einem Rad 8, einen Trag- und Hubrahmen 9 mit zwei parallelen und von einander beabstandeten Gabelarmen 10, die von dem Tragrahmen wegstehen und an ihren freien Enden jeweils eine höhenbewegbare Rolle 11 aufweisen, sodass der Hubrahmen 9 mit seinen Gabelarmen 10 aus einer unteren Hubstellung, in der die Oberseite der Gabelarme 10 von einem Untergrund 12 beispielsweise einen Abstand von 85 mm aufweist in eine obere Hubstellung bewegbar ist, und zwar mit einem Hub von beispielsweise 120 mm.

Zum Aufnehmen und Transportieren einer Palette 2 wird der Hubwagen 1 beispielsweise manuell bei abgesenktem Trag- und Hubrahmen 9 mit seinen Gabelarmen 10 unter die beladenen und daher beispielsweise ein hohes Gewicht aufweisende Palette 2 bewegt. Dies erfolgt je nach Zugänglichkeit der Palette 2 entweder derart, dass die Gabelarme 10 mit ihren Oberseiten 10.1 unterhalb der Querbretter 4 und mit ihrer Längserstreckung in Richtung der Bodenbretter 6 oder aber unterhalb der Deckbretter 3 quer zu den Bodenbrettern 5 angeordnet sind, und zwar jeweils zwischen benachbarten Klötzen 5. Die Länge der Gabelarme ist deutlich größer als die Abmessungen, die die jeweilige Palette 2 zumindest quer zu den Querbrettern 4 aufweist.

Um auch ein Aufnehmen, Anheben und Transportieren der Paletten 2 unter Zeitdruck eine Beschädigung der Paletten 2 zu vermeiden, ist es erforderlich, dass die jeweilige Palette 2 mit sämtlichen Querbrettern 5 oder aber mit sämtlichen Deckbrettern 3 möglichst gleichmäßig auf der Oberseite 10.1 der Gabelarme 10 im angehobenen Zustand aufliegt.

Um das Beschädigen vermeidendes Aufliegen der jeweiligen Palette 2 insbesondere auch mit ihren Deckbrettern 3 auf den Gabelarmen 10 im angehobenen Zustand zu gewährleisten ist ein Gabelarm 10 an seiner Oberseite mit einem Anschlag 13 versehen, und zwar zwischen dem freien Ende und dem mit dem Trag- und Hubrahmen 9 verbundenen Ende dieses Gabelarms 10. Bei der dargestellten Ausführungsform ist der Abstand des Anschlags 13 von dem Trag- und Hubrahmens etwas kleiner ist als der entsprechende Abstand von dem freien Ende des Tragrahmens 10 und entspricht beispielsweise der Breite, die die Paletten 2 in Richtung der Querbretter 4 oder in Richtung der Deckbretter 3. aufweist. Der Anschlag 13 ist durch den Bediener des Hubwagens 1 beispielsweise manuell zwischen einem wirksamen, angehobenen Zustand, in welchem der Anschlag 13 über die Oberseite des Gabelarmes 10 vorsteht, so dass er bereits bei abgesenkten Gabelarmen 10 auch gegen die höheren Deckbretter 3 zur Anlage kommt, und einem nicht wirksamen Zustand bewegbar, in der der Anschlag 13 zumindest soweit abgesenkt ist, dass er nicht mehr über die Oberseite 10.1 des Gabelarmes 10 vorsteht. Die Betätigung des Anschlages 13 erfolgt bei der dargestellten Ausführungsform manuell, und zwar durch eine entsprechend Handhabe, die am Griff 14 einer Zug- und Schubstange 15 des Hubwagens 1 vorgesehen ist. Speziell beim Anheben der Palette 2 an ihren Deckbrettern 3 wird der Anschlag 3 in seine wirksame Stellung bewegt. Er steht dann über die Oberseite des betreffenden Gabelarmes10 soweit vor, dass er nach dem vollständigen Einfahren des Hubwagens 1 unter die Palette 2 schließlich gegen die dem Trag- und Hubrahmen 9 zugewandte Längsseite eines äußeren Deckbrettes 3 zur Anlage kommt, sich somit beide Gabelarme 10 unter sämtlichen Deckbrettern 3 befindend und beim Anheben des Tragrahmens 9 mit den Gabelarmen 10 und damit der Palette 2 eine gleichmäßig Belastung der Deckbretter 3 und damit der Palette erfolgt, auch ohne dass eine der anzuhebenden und zu transportierenden Palette 2 unmittelbar benachbart abgestellte Palette 2 von den Gabelarmen 10 an Teilbereichen mit angehoben und dadurch beschädigt wird. Gleiches gilt sinngemäß beim Aufnehmen der Palette 2 an ihren Querbrettern 4.

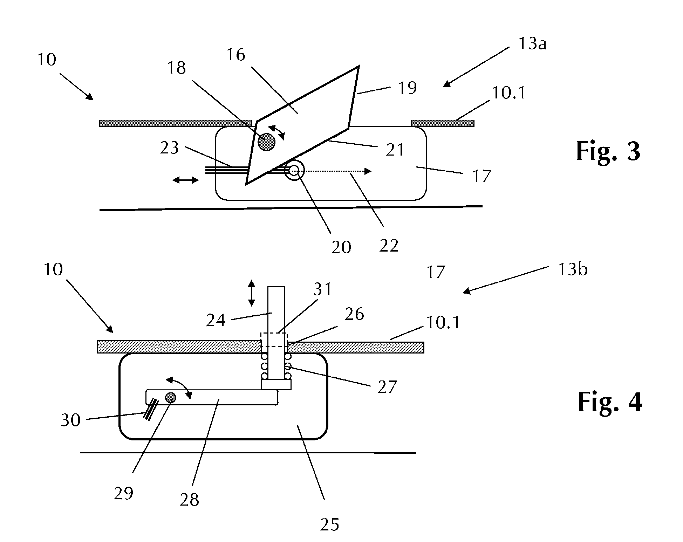

Die Figur 3 zeigt in sehr schematischer Darstellung als mögliche Ausführungsform eine den Anschlags 13 bildende Anschlagvorrichtung 13a. Diese besteht im Wesentlichen aus einem Hebel 16, der in einem im Gabelarm 10 montierten Gehäuse 17 mittels eines Gelenkbolzens 18 schwenkbar vorgesehen ist, und zwar um eine Achse, die parallel oder im Wesentlichen parallel zur Ebene der Gabelarmoberseite 10.1 und senkrecht zur Längserstreckung des Gabelarmes 10 orientiert ist. Das Gehäuse 17 besteht beispielsweise aus zwei Platinen, die durch Abstandhalter voneinander beabstandet sind zwischen denen der schwenkbare Hebel 16 angeordnet ist. Das Gehäuse 17 ist in geeignete Weise an der Unterseite des von einem U-Profil gebildeten Gabelarmes 10 befestigt, und zwar derart, dass es nicht über die Unterseite des Gabelarmes 10 vorsteht. An der Gabelarmoberseite 10.1 ist der Gabelarm 10 in einer schlitzförmigen Öffnung ausgebildet, durch die der Hebel 16 im wirksamen Zustand der Anschlagvorrichtung 13a mit einem die Anschlagfläche 19 für die Palette 2 bildenden und dem Gelenkbolzen 18 entfernt liegenden Ende über die Gabelarmoberseite 10.1 vorsteht. Die Anordnung ist weiterhin so getroffen, dass die Anschlagfläche 19 dem freien Ende des Gabelarmes 10 näher liegt der Gelenkbolzen 18.

Zum Bewegen des Hebels 16 zwischen dem wirksamen und nicht wirksamen Zustand, in dem die Anschlagfläche 19 unter die Gabelarmoberseite 10.1 abgesenkt ist, dient eine Betätigungseinrichtung, die beispielsweise bei der in der Figur 3 dargestellten Ausführungsform von einer in einer Führung, z.B. in einer Schlitzführung im Gehäuse 17 geführten Kurvenrolle 20 besteht, die mit einer am Hebel 16 ausgebildeten Steuerkurve 21 zusammenwirkt. Die Kurvenrolle 20 ist z.B. durch Federmittel 22 in eine dem abgesenkten Zustand des Hebels 16 entsprechenden Stellung vorgespannt und wird durch ein Zugelement 23, beispielsweise über einen Baudenzug, gegen die Wirkung der Federmittel 22 in eine den Hebel 16 über die Steuerkurve 21 in einen angehobenen Zustand schwenkende Stellung bewegt. Das Zurückbewegen des Hebels 16 in die abgesenkte Stellung erfolgt beispielsweise durch Schwerkraft oder aber unterstützt durch weitere Federmittel.

Die Figur 4 zeigt weiterhin eine den Anschlag 13 bildende Anschlagvorrichtung 13b, deren Anschlagelement von einem Zapfen 24 gebildet ist, der in einem Gehäuse 25 axial verschiebbar gelagert ist. Bei am Gabelarm 10 montiertem Anschlag 13b ist der Zapfen 24 mit seiner Achse senkrecht oder im Wesentlichen senkrecht zur Gabelarmoberseite 10.1 orientiert. In der Gabelarmoberseite 10.1 ist eine Öffnung 25 vorgesehen, sodass bei wirksamer Anschlagvorrichtung 13b der Zapfen 24 mit einer ausreichenden axialen Länge über die Gabelarmoberseite 10.1 vorsteht und bei nicht wirksamer Anschlagvorrichtung 13b unter die Gabelarmoberseite 10.1 abgesenkt ist. Das Anheben des Zapfens 24 erfolgt gegen die Wirkung einer Rückstellfeder 27 mit einem doppelarmigen Schwenkhebel 28, der mit einem Gelenkbolzen 29 in dem Gehäuse 25 um eine Achse senkrecht zur Achse des Bolzens 24 schwenkbar gelagert ist und mit einem Ende gegen das untere Ende des Zapfens 24 einwirkt und am anderen Ende mit einer Zugeinrichtung, beispielsweise einem Baudenzug 30 verbunden ist. Zur Abdichtung des Ringspaltes zwischen der Innenfläche der Öffnung 25 und den Zapfen 24 ist eine Dichtung 31., vorzugsweise eine faltenbalgartige Dichtung vorgesehen.

Bei der dargstellten Ausführungsform bilden die Anschlagvorrichtungen 13a und 13b jeweils ein komplettes, voll funktionsfähiges Modul oder eine komplette, voll funktionsfähige Baueinheit, die den Hebel 16, das Gehäuse 17, den Gelenkbolzen 18, die Kurvenrolle 20, die Federmittel 22 und den Anschluss für den Baudenzug 23 bzw. den Zapfen 24, das Gehäuse 25, die Rückstellfeder 27, den Schwenkhebel 28, den Anschluss für den Baudenzug 30 und die Dichtung 31 umfasst. Hierdurch können beim Herstellen des Hubwagens 1 die Anschlagvorrichtungen 13a und 13b vormontiert und als komplette Baueinheit an dem betreffenden Gabelarm 10 befestigt werden. Weiterhin ist es durch diese Ausbildung auch möglich, bereits vorhandene Hubwagen mit den Anschlagvorrichtungen 13a und 13b nachzurüsten.

Der Vorteil der erfindungsgemäßen Ausbildung besteht u.a. darin, dass durch den jeweils aktivierten bzw. in seinem wirksamen Zustand bewegten Anschlag 13 das sichere und beschädigungsfreie Aufnehmen und Anheben der Palette 2 insbesondere auch an ihren Deckbrettern 3 möglich ist, auch unter Vermeidung eines teilweisen Erfassens einer benachbart abgestellten Palette mit den Gabelarmen 10. Bei nicht wirksamen Anschlag 13 stehen die Gabelarme 10 jeweils mit ihrer gesamten Länge, insbesondere auch zum Anheben der Paletten 2 an ihren Querbrettern 4, d.h. an ihren Schmalseiten zur Verfügung.

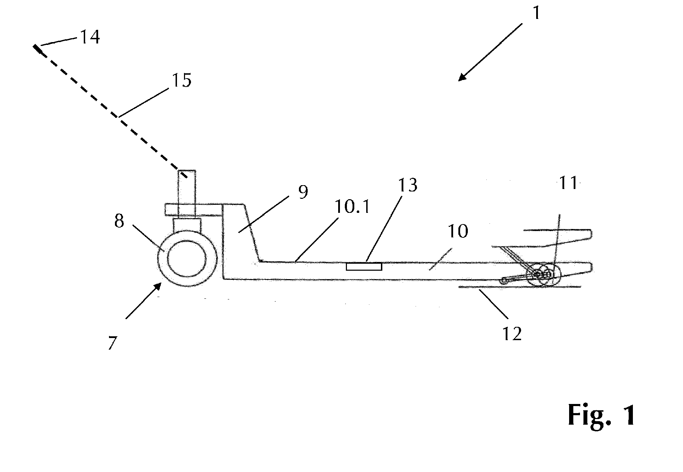

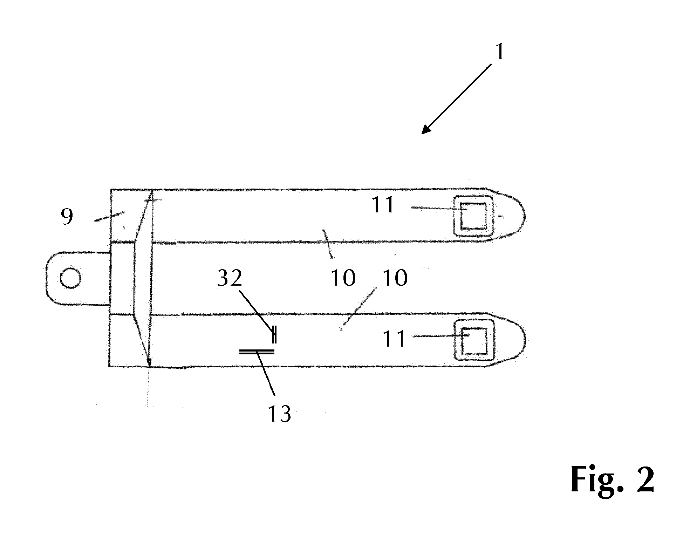

Bei der in den Figuren 1 und 2 dargestellten Ausführungsform ist zusätzlich zu dem Anschlag 13 an der Oberseite eines Gabelarmes 10 auch eine optische Markierung 32 vorgesehen.

Die Erfindung wurde voranstehend aus Ausführungsbeispielen beschrieben. Es versteht sich, dass zahlreiche Änderungen und Abwandlungen, insbesondere auch hinsichtlich der speziellen Ausbildung des Anschlags 13 möglich sind. Weiterhin besteht auch die Möglichkeit, an beiden Gabelarmen 10 jeweils wenigstens einen Anschlag 13 bzw. wenigstens eine Anschlagvorrichtung 13a oder 13b vorzusehen. Weiterhin ist die Erfindung nicht auf Hubwagen beschränkt, sondern betrifft Palettenhub- und Transportvorrichtungen ganz allgemein, beispielsweise auch in Form von Gabelstaplern.

Der Vorteil der erfindungsgemäßen Ausbildung besteht u.a. darin, dass durch den jeweils aktivierten bzw. in seinem wirksamen Zustand bewegten Anschlag 13 das sichere und beschädigungsfreie Aufnehmen und Anheben der Palette 2 insbesondere auch an ihren Deckbrettern 3 möglich ist, auch unter Vermeidung eines teilweisen Erfassens einer benachbart abgestellten Palette mit den Gabelarmen 10. Bei nicht wirksamen Anschlag 13 stehen die Gabelarme 10 jeweils mit ihrer gesamten Länge, insbesondere auch zum Anheben der Paletten 2 an ihren Querbretter 4, d.h. an ihren Schmalseiten zur Verfügung.

### Bezugszeichenliste

- 1: Hubwagen
- 2: Palette
- 3: Deckbrett
- 4: Querbrett
- 5: Klotz
- 6: Bodenbrett
- 7: lenkbare Achse
- 8: Rad
- 9: Trag- und Hubrahmen
- 10: Gabelarm
- 10.1: Gabelarmoberseite
- 11: Rolle
- 12: Untergrund
- 13: Anschlag
- 13a, 13: Anschlagvorrichtung
- 14: Griff
- 15: Zug- und Schubstange bzw. Lenker
- 16: Hebel
- 17: Gehäuse
- 18: Gelenkbolzen
- 19: Anschlagfläche
- 20: Kurvenrolle
- 21: Steuerkurve
- 22: Federmittel
- 23: Zugelement
- 24: Zapfen
- 25: Gehäuse
- 26: Öffnung
- 27: Feder
- 28: Hebel
- 29: Gelenkbolzen
- 30: Zugelement oder Baudenzug
- 31: Dichtung
- 32: optische Markierung

## Patentansprüche

1. Palettenhub- und Transportvorrichtung mit einem anhebbaren und absenkbaren Trag- und Hubrahmen (9) sowie mit wenigstens zwei voneinander beabstandeten und vom Trag- und Hubrahmen (9) wegstehenden Gabelarmen (10), die jeweils mit einer Gabelarmoberseite (10.1) eine Palettenauflage bilden,
**dadurch gekennzeichnet,**
**dass** an wenigstens einem Gabelarm (10) zwischen einem freien Ende dieses Gabelarms und dem Trag- und Hubrahmen (9) eine Markierung (13, 13a, 13b; 32) vorgesehen ist.

2. Palettenhub- und Transportvorrichtung nach Anspruch 1, **dadurch gekennzeichnet, dass** an wenigstens einem Gabelarm (10) zwischen einem freien Ende dieses Gabelarms und dem Trag- und Hubrahmen (9) als Markierung ein Anschlag (13, 13a, 13b) für eine seitliche Anlage gegen die Palette (2) vorgesehen ist, und dass der Anschlag (13, 13a, 13b) zwischen einem wirksamen und einem nicht wirksamen Zustand bewegbar ist.

3. Palettenhub- und Transportvorrichtung nach Anspruch 2, **dadurch gekennzeichnet, dass** der Anschlag (13, 13a, 13b) im wirksamen Zustand über die Ebene der Gabelarmoberseite (10.1) oder der Palettenanlage vorsteht und im nicht wirksamen Zustand soweit abgesenkt ist, dass er nicht über diese Ebene vorsteht.

4. Palettenhub- und Transportvorrichtung nach Anspruch 2 oder 3, **dadurch gekennzeichnet, dass** der Abstand, den der Anschlag (13, 13a, 13b) oder eine Palettenanlagefläche (19) dieses Anschlags von dem freien Ende des Gabelarmes (10) aufweist, gleich oder im Wesentlichen gleich den Seiten-Abmessungen der Paletten (8) ist, beispielsweise gleich oder im Wesentlichen gleich der Schmalseite der in Draufsicht rechteckförmigen Paletten.

5. Palettenhub- und Transportvorrichtung nach einem der vorhergehenden Ansprüche, **dadurch gekennzeichnet, dass** der Anschlag (13, 13a, 13b) manuell oder motorisch zwischen seinem wirksamen und nicht wirksamen Zustand bewegbar ist.

6. Palettenhub- und Transportvorrichtung nach einem der vorhergehenden Ansprüche, **dadurch gekennzeichnet, dass** der Anschlag (13a, 13b) durch Schwenken und/oder durch eine Verschiebe- oder Gleitbewegung zwischen dem wirksamen und nicht wirksamen Zustand bewegbar ist.

7. Palettenhub- und Transportvorrichtung nach einem der vorhergehenden Ansprüche, **dadurch gekennzeichnet, dass** der Anschlag (13a, 13b) ein bewegliches Anschlagelement aufweist, beispielsweise in Form eines Schwenkhebels (16) oder eines axial verschiebbaren Zapfens (24).

8. Palettenhub- und Transportvorrichtung nach Anspruch 7, **dadurch gekennzeichnet, dass** das Anschlagelement (16, 24) in einem Gehäuse (17, 25) beweglich angeordnet ist, und dass das Gehäuse (17, 25), das Anschlagelement (16, 24) sowie Steuer- und Betätigungsmittel zum Bewegen des Anschlagelementes zwischen seiner wirksamen und seiner nicht wirksamen Stellung eine komplette Baueinheit bilden.

9. Palettenhub- und Transportvorrichtung nach einem der vorhergehenden Ansprüche, **dadurch gekennzeichnet, dass** sie als Hubwagen (1) ausgebildet ist.

10. Anschlagvorrichtung zur Verwendung bei einer Palettenhub- und Transportvorrichtung, **gekennzeichnet durch** ein in einem Gehäuse (17, 25) bewegbar angeordnetes Anschlagelement (16, 24), wobei das Gehäuse (17, 25), das Anschlagelement (16, 24) sowie Steuer- und/oder Betätigungsmittel (20, 21, 22; 27, 28) für das Anschlagelement (16, 24) eine komplette vollfunktionsfähige Baueinheit bilden.

11. Anschlagvorrichtung nach Anspruch 10, **dadurch gekennzeichnet, dass** das Anschlagelement ein Schwenkhebel (16) oder ein axial verschiebbarer Zapfens (24) ist.
